# EUROPÄISCHE PATENTSCHRIFT

(11) **EP 2 885 332 B1**
(45) Veröffentlichungstag und Bekanntmachung des Hinweises auf die Patenterteilung: **19.09.2018**
(21) Anmeldenummer: 13753308.9
(22) Anmeldetag: 16.08.2013
(51) Int. Cl.: C08G 18/40, C08G 18/58

(54) **POLYURETHAN-GIEßHARZE UND DARAUS HERGESTELLTE VERGUSSMASSEN**
POLYURETHANE CASTING RESINS AND POTTING COMPOUNDS PRODUCED THEREFROM
RÉSINES DE COULÉE DE POLYURÉTHANE ET MATÉRIAUX D'ENROBAGE PRODUITS À PARTIR DE CES DERNIÈRES

(30) Priorität: 20.08.2012 EP 12180969
(43) Veröffentlichungstag der Anmeldung: 24.06.2015
(73) Patentinhaber: Covestro Deutschland AG, 51373 Leverkusen (DE)
(72) Erfinder: HUPKA, Florian, 40589 Düsseldorf (DE); SCHORNSTEIN, Marcel, 41462 Neuss (DE); WEGENER, Dirk, 40789 Monheim (DE); RASSELNBERG, Harald, 41541 Dormagen (DE); MICHELS, Erhard, 21680 Stade (DE)
(74) Vertreter: Levpat
(86) Internationale Anmeldenummer: PCT/EP2013/067160
(87) Internationale Veröffentlichungsnummer: WO 2014/029700

(56) Entgegenhaltungen:
- EP-A1- 0 148 344
- EP-A2- 1 471 088
- WO-A1-2012/022683
- US-A- 4 726 868

## Beschreibung

Die vorliegende Erfindung betrifft Polyurethan-Gießharze zur Herstellung von Polyurethan-Vergussmassen, die aus einer Reaktionsmischung aus Polyisocyanaten, Polyepoxiden, Polyolen, latenten Katalysatoren und gegebenenfalls Additiven erhältlich sind, sowie ein Verfahren zu deren Herstellung.

Vergussmassen werden häufig zum Schutz elektrotechnischer Bauelemente und Schaltungen, wie z.B. Transformatoren, Isolatoren und Kondensatoren, oder von offenen Kontaktstellen bei Kabeln und Leitungen zur Vermeidung schädigender Umgebungseinflüsse verwendet. Dabei besteht das Matrixmaterial üblicherweise aus ungesättigten Polyester-, Vinylester-, Polyurethan- oder Epoxidharzen.

Vergussmassen werden z.B. in der Automobilindustrie, im Bauwesen oder in der Elektroindustrie, aber auch in der Umwelttechnik und für den Bau alternativer Energiegewinnungsanlagen verwendet. An die Vergussmasse, also an das Gießharz, werden hohe Anforderungen gestellt. So muss das Gießharz zum einen eine niedrige Verarbeitungsviskosität, gekoppelt mit einer langen Topfzeit besitzen, um insbesondere bei Großanlagen alle Zwischenräume lunker- und blasenfrei auszufüllen. Die Glasübergangstemperatur und damit auch die Wärmeformbeständigkeit sollte sehr hoch sein, um im Einsatztemperaturbereich ein möglichst konstantes Eigenschaftsprofil zu besitzen. Trotz der langen Topfzeit sollte das Gießharz zudem eine kurze Aushärtezeit besitzen, um lange Temperzykluszeiten zu vermeiden und so eine Wirtschaftlichkeit zu garantieren.

Während Gießharze auf Epoxidharzbasis Topfzeiten bis zu einer Stunde aufweisen, so dass auch mittel- und großvolumige Teile damit hergestellt werden können, weisen diejenigen auf Polyurethanbasis (PUR-Basis) in der Regel sehr kurze Topfzeiten, häufig nur wenige Minuten auf. Daher können diese PUR-Gießharze in der Regel mittels Gießmaschinen nur für kleinvolumige Formteile eingesetzt werden. Die speziell für großvolumige Spulen heißhärtenden Gießharze auf Epoxidbasis enthalten typischer Weise ca. 65 Gewichtsprozent Füllstoff, beispielsweise Quarzmehl, Aluminiumoxid oder Wollastonit. Gerade aufgrund der hohen Füllstoffgehalte ist es notwendig, dass das Gießharz eine niedrige Viskosität besitzt. Je höher der Füllstoffgehalt, desto schlechter das Fließverhalten und damit die Eigenschaft lunker- und blasenfrei füllen zu können.

In EP 1471088 A2 werden Polyurethan-Formulierungen auf der Basis von Polyisocyanaten und aminisch gestarteten Polyolverbindungen beschrieben, die aufgrund einer sich schnell einstellenden Verträglichkeit der Rohstoffkomponenten beim Mischvorgang, ein verbessertes Verarbeitungsverhalten aufweisen, sowie ihre Verwendung zur Herstellung von Gussstücken, Einbettmassen, Laminaten und Beschichtungen. Die beschriebenen Polyurethan-Gießharze haben lange Topfzeiten von bis zu einer Stunde. Nachteilig ist hierbei allerdings, dass die Gießharze für 16 Stunden bei Raumtemperatur ausgehärtet und anschließend weitere 8 Stunden bei 80 °C getempert werden müssen, um sogenannte Muschelrisse in den fertigen Vergussformteilen zu vermeiden. Die Glasübergangstemperaturen sind zudem mit unter 120 °C sehr niedrig.

DE 102008054940 A1 beschreibt Gießharze auf der Basis von Polyurethanen aus zwei Komponenten, wobei spezielle Polyesteralkohole mit Polyisocyanaten, im Wesentlichen ohne Katalysatoren, umgesetzt werden. Die resultierende Topfzeit liegt bei 22 Minuten, die Entformzeit ist mit 63 Minuten sehr lang. Da die Temperatur beim Aushärtevorgang auf ca. 83°C ansteigt und die Vergussform nicht beheizt wird, ist davon auszugehen, dass die Glasübergangstemperatur bei maximal 100 °C liegt und damit sehr niedrig ist.

Das Dokument EP 0 148 344 A1 offenbart ein Verfahren zur Herstellung von Polyurethanen mit einem verbesserten Wärmealterungsverhalten. Im Beispiel 3 von D1 wird die Herstellung des Polyurethans beschrieben: ein Polyetherpolyol, ein Epoxidharz, ein Polyisocyanat sowie ein latenter Katalysator werden zur Reaktion gebracht. Das Verhältnis der Anzahl der NCO-Gruppen zu der Anzahl der Epoxidgruppen beträgt 7,1, 3,6 bzw. 2,4. Die bisher eingesetzten und beschriebenen Polyurethan-Gießharze haben den Nachteil, dass
i) die Topfzeiten für großvolumige Formteile zu kurz sind
ii) es zu lange dauert, bis das Gießharz ausgehärtet ist, was zu einer geringen Produktivität führt
iii) lange Temperzyklen durchlaufen werden müssen, um die Gießharze vollständig auszuhärten und um Rissbildung oder Deformation der Vergussmassen zu vermeiden
iv) die Glasübergangstemperaturen für viele Anwendungen zu niedrig sind
v) eine hohe Flammwidrigkeit der Vergussmassen nicht gegeben ist.

Unter Topfzeit versteht man die Dauer der Verarbeitbarkeit des Reaktivsystems.

Aufgabe der vorliegenden Erfindung war es daher, ein Matrixmaterial zur Herstellung von Vergussmassen zur Verfügung zu stellen, das die vorgenannten Nachteile nicht besitzt und dennoch die hohen mechanischen und elektrischen Eigenschaften üblicher Vergussmassen aufweist, sowie ein Verfahren zur Herstellung solcher Vergussmassen.

Diese Aufgabe konnte überraschenderweise durch Gießharze aus einem PUR-Matrixmaterial (Reaktionsmischung) gelöst werden, das aus Polyisocyanaten, Polyepoxiden, Polyolen, latenten Katalysatoren sowie gegebenenfalls üblichen Additiven erhältlich ist, wobei ein großer Überschuss an Isocyanatgruppen im Verhältnis zur Anzahl an OH-Gruppen vorliegt.

Gegenstand der Erfindung sind Vergussmassen auf Polyisocyanurat- und Polyurethanbasis, wobei das Polyurethan und das Polyisocyanurat aus einer Reaktionsmischung erhältlich sind, die aus
A) einem oder mehreren Polyisocyanaten
B) einem oder mehreren Polyolen
C) einem oder mehreren Polyepoxiden
D) einem oder mehreren latenten Katalysatoren
E) gegebenenfalls Additiven und
F) gegebenenfalls Füllstoffen besteht,
wobei die Mischung ohne Füllstoffe bei 25 °C eine Viskosität von 20 bis 500 mPas, bevorzugt von 50 bis 400 mPas, besonders bevorzugt von 60 bis 350 mPas (gemessen nach DIN EN ISO 1342), ein Verhältnis der Anzahl der NCO-Gruppen der Komponente A) zu der Anzahl der OH-Gruppen der Komponente B) von 10:1 bis 16:1, bevorzugt von 11:1 bis 14:1, ein Verhältnis der Anzahl der NCO-Gruppen der Komponente A) zu der Anzahl der Epoxidgruppen der Komponente C) von 2:1 bis 25:1, bevorzugt von 7:1 bis 15:1, ganz besonders bevorzugt von 10:1 bis 14:1 und ein Verhältnis der Anzahl der Epoxid-Gruppen der Komponente C) zu der Anzahl der Mole an latentem Katalysator der Komponente D) von 1,1:1 bis 12:1, bevorzugt von 3:1 bis 10:1, ganz besonders bevorzugt von 5:1 bis 7:1 aufweist.

Polyisocyanurate (PIR) bilden sich durch die Trimerisation von Isocyanatgruppen. Der Isocyanuratring ist sehr stabil. Die Isocyanate reagieren am Anfang vorzugsweise mit Polyolen zu Polyurethanen. Im weiteren Verlauf, wenn die meisten OH-Gruppen abreagiert sind, kommt es zur Polyisocyanuratbildung. Die erfindungsgemäßen Vergussmassen sind optisch transparent und haben eine gute Hitzestabilität.

Das Polyurethan/Polyisocyanurat enthält im Prinzip keine Oxazolidinongruppen. Sollten wider Erwarten doch Oxazolidinongruppen im Polyurethan/Polyisocyanurat durch untergeordnete Nebenreaktion auftreten, so liegt deren Gehalt unter 5 Gew.-%, bezogen auf Polyurethan/Polyisocyanurat. Die Oxazolidinongruppen entstehen, wenn Polyisocyanate mit Epoxiden reagieren. Diese stören im Vergussbauteil nicht.

Die Viskosität wird gemäß DIN EN ISO 1342 und entsprechend den Angaben im Beispielteil bestimmt.

Zu den Gießharzen können verschiedene Additive zugesetzt werden. Additiv zugesetzte Füllstoffe sind feinkörnige, meist mineralische Stoffe wie Quarzmehl, Sand, Kreide, Glas- oder Textilkurzfasern, die die mechanische Festigkeit erhöhen und das Schrumpfen beim Aushärten sowie den Ausdehnungskoeffizienten des fertigen Formstoffes reduzieren. Im Weiteren verbilligen diese Zusätze häufig das Gießharz, verringern die Brandneigung und verbessern meist auch die Wärmeleitung. Diese Vorteile werden durch eine schwierigere Verarbeitung erkauft, da hierdurch die Viskosität des Harzes zunimmt und der Füllstoff sedimentieren kann. Bei der industriellen Verarbeitung in Gießanlagen führt der Füllstoff in der Regel auch zu höherem Anlagenverschleiß. Außerdem können noch verschiedene Pigmente eingesetzt werden, die für die gewünschte Farbgebung des Gießharzes sorgen.

Der Füllstoffanteil in der Vergussmasse beträgt vorzugsweise mehr als 40 Gew.-% bis 80 Gew.-%, besonders bevorzugt mehr als 55 Gew.-% bis 65 Gew.-%, bezogen auf das Gesamtgewicht der Vergussmasse.

Das Gießharz (die Reaktionsmischung) wird bei einer Temperatur von 50 °C bis 170 °C, vorzugsweise von 110 °C bis 140 °C ausgehärtet.

Die erfindungsgemäß eingesetzten Polyurethan-Reaktionsmischungen haben niedrige Viskositäten, sehr lange Topfzeiten und weisen kurze Aushärtezeiten bei niedrigen Aushärtetemperaturen auf und ermöglichen so eine schnelle Fertigung.

Ein weiterer Vorteil der erfindungsgemäß eingesetzten Mischungen ist das verbesserte Verarbeitungsverhalten durch eine direkte Verträglichkeit der Mischung aus Polyol und Polyepoxid mit dem Polyisocyanat. Bei den bisher verwendeten Systemen aus Polyisocyanaten und Polyolen müssen die Komponenten vorab für mehrere Minuten vermischt werden, da erst durch die beginnende Urethanbildung eine Verträglichkeit der Komponenten und eine Homogenität der Mischung erreicht wird, die für die Verarbeitung notwendig ist. Ansonsten käme es zu unvollständiger Härtung und zu inhomogenen Produkten. Die Komponenten der erfindungsgemäß eingesetzten Reaktionsmischungen können bei 20 bis 100 °C, bevorzugt bei 25 bis 70 °C, gemischt und anschließend weiterverarbeitet werden.

Um alle Zwischenräume lunker- und blasenfrei auszufüllen, sollte die Polyurethan-Reaktionsmischung beim Einfüllen vorzugsweise dünnflüssig sein und möglichst lange dünnflüssig bleiben. Dies ist besonders bei großen Bauteilen nötig, da hier die Füllzeit sehr lang ist. Vorzugsweise liegt die Viskosität der erfindungsgemäßen, ungefüllten Polyurethan-Reaktionsmischungen bei 25°C direkt nach dem Vermischen zwischen 20 und 500 mPas, bevorzugt zwischen 50 und 400 mPas, besonders bevorzugt zwischen 60 und 350 mPas. Bevorzugt ist die Viskosität der erfindungsgemäßen, ungefüllten Reaktionsmischungen bei einer konstanten Temperatur von 25°C 30 Minuten nach dem Vermischen der Komponenten kleiner als 800 mPas, bevorzugt kleiner als 500 mPas und besonders bevorzugt kleiner als 300 mPas. Die Viskosität wurde 30 Minuten nach dem Vermischen der Komponenten bei einer konstanten Temperatur von 25 °C mit einem Rotationsviskosimeter bei einer Scherrate von 60 1/s bestimmt.

Beim optionalen Einsatz von Füllstoffen ist eine niedrige Viskosität der Reaktionsmischung ebenfalls vorteilhaft, so dass neben der Möglichkeit eines hohen Füllstoffgehaltes ein guter Materialfluss gewährleistet bleibt.

Die erfindungsgemäß eingesetzten Reaktionsmischungen können auf Gießmaschinen mit Statikmischern oder mit dynamischen Mischern verarbeitet werden, da nur eine kurze Mischzeit benötigt wird. Dies ist bei der Herstellung der erfindungsgemäßen Vergussmassen von großem Vorteil, da die Reaktionsmischung für einen guten Materialfluss möglichst dünnflüssig sein muss. Eine nicht erfindungsgemäße Mischung, die erst vorab für einige Minuten vermischt werden muss, zeigt durch die Bildung von Urethangruppen und der daraus resultierenden Exothermie bereits eine zu hohe Viskosität, was bis zu einer vollständigen Aushärtung der Mischung führen kann.

Ein weiterer Vorteil der erfindungsgemäß eingesetzten Reaktionsmischung ist, dass sie in einem einstufigen Prozess verarbeitet werden kann und dass eine niedrige Aushärtungstemperatur von 50°C bis 170°C ausreichend ist. Außerdem können die ausgehärteten Vergussmassen im Bedarfsfall sehr schnell entformt werden, ohne dass eine Rissbildung oder Deformation am Vergussbauteil auftritt.

Die erfindungsgemäßen Vergussmassen auf Polyisocyanurat- und Polyurethanbasis können dadurch hergestellt werden, dass eine Reaktionsmischung bestehend aus
A) einem oder mehreren Polyisocyanaten
B) einem oder mehreren Polyolen
C) einem oder mehreren Polyepoxiden
D) einem oder mehreren latenten Katalysatoren und
E) gegebenenfalls Additiven und
F) gegebenenfalls Füllstoffen
hergestellt und ausgehärtet wird, wobei die Reaktionsmischung ohne Füllstoffe bei 25 °C eine Viskosität von 20 bis 500 mPas, bevorzugt von 50 bis 400 mPas, besonders bevorzugt von 60 bis 350 mPas (gemessen nach DIN EN ISO 1342), ein Verhältnis der Anzahl der NCO-Gruppen der Komponente A) zu der Anzahl der OH-Gruppen der Komponente B) von 10:1 bis 16:1, bevorzugt von 11:1 bis 14:1, ein Verhältnis der Anzahl der NCO-Gruppen der Komponente A) zu der Anzahl der Epoxidgruppen der Komponente C) von 2:1 bis 25:1, bevorzugt von 7:1 bis 15:1, ganz besonders bevorzugt von 10:1 bis 14:1 und ein Verhältnis der Anzahl der Epoxid-Gruppen der Komponente C) zu der Anzahl der Mole an latentem Katalysator der Komponente D) von 1,1:1 bis 12:1, bevorzugt von 3:1 bis 10:1, ganz besonders bevorzugt von 5:1 bis 7:1 aufweist.

Als Polyisocyanatkomponente A) kommen die üblichen aliphatischen, cycloaliphatischen und insbesondere aromatischen Di- und/oder Polyisocyanate zum Einsatz. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (pMDI), 1,3- und/oder 1,4-Bis-(2-isocyanato-prop-2-yl)-benzol (TMXDI), 1,3-Bis-(isocyanatomethyl)benzol (XDI). Neben den vorstehend genannten Polyisocyanaten können anteilig auch modifizierte Polyisocyanate mit Uretdion-, Isocyanurat-, Urethan-, Carbodiimid-, Uretonimin-, Allophanat- oder Biuretstruktur eingesetzt werden. Als Isocyanat wird vorzugsweise Diphenylmethandiisocyanat (MDI) und insbesondere Gemische aus Diphenylmethandiisocyanat und Polyphenylenpolymethylenpolyisocyanat (pMDI) verwendet. Die Gemische aus Diphenylmethandiisocyanat und Polyphenylenpolymethylenpolyisocyanat (pMDI) haben einen bevorzugten Monomergehalt von zwischen 60 und 100 Gew.-%, bevorzugt zwischen 70 und 95 Gew.-%, besonders bevorzugt zwischen 80 und 90 Gew.-%. Der NCO-Gehalt des verwendeten Polyisocyanates sollte vorzugsweise über 25 Gew.-%, bevorzugt über 30 Gew.-%, besonders bevorzugt über 32 Gew.% liegen. Der NCO-Gehalt kann nach DIN 53185 bestimmt werden. Die Viskosität des Isocyanates sollte vorzugsweise ≤ 250 mPas (bei 25°C), bevorzugt ≤ 50 mPas (bei 25°C) und besonders bevorzugt von ≤ 30 mPas (bei 25°C) sein.

Die Polyole B) können beispielsweise ein zahlenmittleres Molekulargewicht Mₙ von ≥ 200 g/mol bis ≤ 8000 g/mol, bevorzugt von ≥ 500 g/mol bis ≤ 5000 g/mol und besonders bevorzugt von ≥ 1000 g/mol bis ≤ 3000 g/mol aufweisen. Die OH-Zahl der Komponente B) gibt im Falle eines einzelnen zugesetzten Polyols dessen OH-Zahl an. Im Falle von Mischungen wird die zahlenmittlere OH-Zahl angegeben. Dieser Wert kann anhand von DIN 53240 bestimmt werden. Die Polyolformulierung enthält vorzugsweise als Polyole solche, die eine zahlenmittlere OH-Zahl von 25 bis 1000 mg KOH/g, bevorzugt von 30 bis 400 mg KOH/g und besonders bevorzugt von 40 bis 80 mg KOH/g aufweisen. Die Viskosität der Polyole ist vorzugsweise ≤ 800 mPas (bei 25°C). Vorzugsweise haben die Polyole mindestens 60 % sekundäre OH-Gruppen, bevorzugt mindestens 80 % sekundäre OH-Gruppen und besonders bevorzugt 90 % sekundäre OH-Gruppen. Polyetherpolyole auf Basis Propylenoxid sind besonders bevorzugt. Bevorzugt haben die eingesetzten Polyole eine mittlere Funktionalität von 1,8 bis 4,0, besonders bevorzugt 1,9 bis 2,5.

Erfindungsgemäß können Polyetherpolyole, Polyesterpolyole oder Polycarbonatpolyole eingesetzt werden. Geeignete Polyetherpolyole sind Additionsprodukte von Styroloxid, Ethylenoxid, Propylenoxid und/oder Butylenoxid an di- oder polyfunktionelle Startermoleküle. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren oder Hydroxylgruppen aufweisende Öle.

Die Polyole B) können Füllstoffe und Polymere enthalten.

Als Polyepoxide C) sind niedrigviskose aliphatische, cycloaliphatische oder aromatische Epoxide sowie deren Mischungen besonders gut geeignet. Die Polyepoxide können durch Umsetzung von Epoxiden, beispielsweise Epichlorhydrin, mit Alkoholen dargestellt werden. Als Alkohole können beispielsweise Bisphenol A, Bisphenol F, Bisphenol S, Cyclohexandimethanol, Phenol-FormaldehydHarze, Kresol-Formaldehyd-Novolake, Butandiol, Hexandiol, Trimethylolpropan oder Polyetherpolyole eingesetzt werden. Es können auch Glycidylester, beispielsweise von Phthalsäure, Isophthalsäure oder Terephthalsäure sowie deren Mischungen eingesetzt werden. Epoxide können auch durch die Epoxidierung von Doppelbindungen enthaltenden organischen Verbindungen hergestellt werden, beispielsweise durch die Epoxidierung von fetten Ölen, wie Sojaöl, zu epoxidiertem Sojaöl. Die Polyepoxide können auch monofunktionelle Epoxide als Reaktivverdünner enthalten. Diese können durch die Reaktion von Alkoholen mit Epichlorhydrin hergestellt werden, beispielsweise Monoglycidylether von C4-C18 Alkoholen, Cresol, p-tert.-Butylpenol. Weitere einsetzbare Polyepoxide sind beispielsweise in "Handbook of Epoxy resins" von Henry Lee und Kris Neville, McGraw-Hill Book Company, 1967, beschrieben. Bevorzugt werden Glycidylether von Bisphenol A eingesetzt, die ein Epoxidäquivalentgewicht im Bereich von 170 - 250 g/eq, besonders bevorzugt mit einem Epoxidäquivalentgewicht im Bereich von 176 bis 196 g/eq haben. Der Epoxidquivalentwert kann nach ASTM D-1652 bestimmt werden. Beispielsweise kann hierfür das Eurepox 710 oder das Araldite® GY-250 eingesetzt werden.

Bevorzugt eingesetzte latente Katalysatoren D) sind im Bereich zwischen 50°C und 120°C katalytisch aktiv. Typische latente Katalysatoren sind beispielsweise blockierte Amin- und Amidin-Katalysatoren der Hersteller Air Products (wie z.B. Polycat® SA-1/10, Dabco KTM 60) und Tosoh Corporation (wie z.B. Toyocat® DB 2, DB 30, DB 31, DB 40, DB 41, DB 42, DB 60, DB 70) und Huntsman Corporation (wie z.B. Accelerator DY 9577). Es können aber auch alle weiteren, typischen latenten Katalysatoren aus der Polyurethanchemie mit einer sogenannten Schalttemperatur von 50°C bis 120°C eingesetzt werden.

Als latente Katalysatoren D) können die bekannten Katalysatoren, meist Basen (tertiäre Amine, Salze schwacher Säuren wie Kaliumacetat) und organische Metallverbindungen eingesetzt werden. Bevorzugte latent-reaktive Katalysatoren sind Salze von tertiären Aminen. Diese latent-reaktiven Katalysatoren lassen sich beispielsweise durch chemische Blockierung eines katalytisch aktiven Amins erhalten. Die chemische Blockierung kann durch die Protonierung eines tertiären Amins mit einer Säure wie zum Beispiel Ameisensäure, Essigsäure, Ethylhexansäure oder Ölsäure oder eines Phenols oder durch Bortrichlorid erfolgen. Trialkylamine und heterozyklische Amine können als Amin verwendet werden, beispielsweise Trimethylamin, Triethylamin, Tripropylamin, Tributylamin, Dimethylcyclohexylamin, Dimethylbenzylamin, Dibutylcyclohexylamin, Dimethylethanolamin, Triethanolamin, Diethylethanolamin, Ethyldiethanolamin, Dimethylisopropanolamin, Dimethyloctylamin, Triisopropanolamin, Triethylenediamin, Tetramethyl-1,3-butandiamin, N,N,N',N'-Tetramethylethylendiamin, N,N,N',N'-Tetramethylhexandiamin-1,6, N,N,N',N',N"-Penta-methyldiethylentriamin, Bis(2-dimethylaminoethoxy)-methan, N,N,N'-Trimethyl-N'-(2-hydroxyethyl)-ethylendiamin, N,N-Dimethyl-N',N'-(2-hydroxyethyl)-ethylendiamin, Tetramethylguanidin, N-Methylpiperidin, N-Ethylpiperidin, N-Methylmorpholin, N-Ethylmorpholin, 1,4-Dimethylpiperidin, 1,2,4-Trimethylpiperidin, N-(2-Dimethylaminoethyl)-morpholin, 1-Methyl-4-(2-dimethylamino)-piperidin, 1,4-Diazabicyclo[2.2.2]oktan, 1,8-Diazabicyclo[5.4.0]undec-7-en, und 1,5-diazabicyclo[4.3.0]-5-nonan.

Beispiele für kommerziell verfügbare latent-reaktive Katalysatoren sind das Polycat® SA1/10 (Phenol-blockiertes 1,8-Diazabicyclo[5.4.0]undec-7-en (=DBU)), Polycat® SA 102/10, DABCO® 8154 (Ameisensäure-blockiertes Triethylendiamin) oder DABCO® WT. Besonders bevorzugt ist Trichlor(N,N-dimethyloctylamin)bor.

Gegebenenfalls können Additive E) zugesetzt werden. Hierbei handelt es sich beispielsweise um zusätzliche Katalysatoren, Entlüfter, Entschäumer, Inhibitoren, Füllstoffe und Verstärkungsstoffe. Weitere bekannte Additive und Zusatzmittel können bei Bedarf verwendet werden. Zugegebene Weichmacher zur Reaktionsmischung ermöglichen darüber hinaus eine Erhöhung der Elastizität der Vergussmasse. Additive, wie Entschäumer, Viskositätsmodifikatoren und Haftvermittler können ebenfalls die End- und Verarbeitungseigenschaften verbessern. Diese Komponenten werden entweder separat zugesetzt oder sind bereits in der Polyolkomponente enthalten.

Zur Verbesserung der Brandbeständigkeit können der Matrix gegebenenfalls Flammschutzmittel zugesetzt werden, z.B. phosphorhaltige Verbindungen, vor allem Phosphate und Phosphonate, sowie auch halogenierte Polyester und Polyole oder Chlorparaffine. Ferner können auch nicht-flüchtige Flammschutzmittel wie Melamin oder expandierbarer Graphit (Blähgraphit) zugesetzt werden, welches sich unter Flammeinwirkung stark ausdehnt und dabei die Oberfläche vor weiterer Hitzeeinwirkung versiegelt.

Die erfindungsgemäßen Gießharze können zum Verguss von elektronischen Bauteilen und Schaltungen und damit zu deren Schutz, wie z.B. Transformatoren, Isolatoren, Kondensatoren, Halbleitern, Kabeln und Leitungen, in der Automobilindustrie, im Bauwesen, aber auch in der Umwelttechnik und für den Bau alternativer Energiegewinnungsanlagen verwendet werden.

Die Erfindung soll anhand der nachfolgenden Beispiele näher erläutert werden.

### Beispiele

Es wurden erfindungsgemäße Gießharze aus Polyisocyanaten, Polyolen, Polyepoxiden und latenten Katalysatoren hergestellt und mit nicht erfindungsgemäßen Gießharzen aus Polyisocyanaten, Polyolen, Polyepoxiden und latenten Katalysatoren verglichen.

Für die Herstellung von gefüllten Vergussmassen wurden ca. 60 Gewichts-% Millisil W-12® (Fa. Quarzwerke), bezogen auf die spätere Masse, in die Reaktionsmischung eingearbeitet. Sowohl die gefüllte als auch die ungefüllte Reaktionsmischung wurden in eine verschlossene, auf 130 °C aufgeheizte Form gegeben und das fertige Vergussbauteil nach abgeschlossener Aushärtung entformt.

An den Vergussmassen wurden die mechanischen und elektrischen Messungen vorgenommen. Der Füllstoffgehalt wurde durch Veraschung der Probenkörper nach DIN EN ISO 1172 bestimmt. Die Biegefestigkeit und Biegedehnung wurde mit einem 3-Punkt-Biegeversuch nach DIN EN ISO 178 bestimmt.

Die Viskosität wurde direkt nach dem Vermischen und 60 Minuten nach dem Vermischen der Komponenten mit einem Rotationsviskosimeter bei 25°C oder 50 °C mit einer Scherrate von 60 1/s nach DIN EN ISO 1342 bestimmt.

Für die Bestimmung der Flammwidrigkeit wurde die vertikale Flammenausbreitung bei Kantenbeflammung mit einem Kleinbrennertest in Anlehnung an DIN 53438-2 bestimmt.

Im Rahmen dieser Patentanmeldung wird unter dem Index das Verhältnis von NCO/OH-Gruppen verstanden.

Mit der Hydroxyzahl (OH-Zahl) sind alle OH-funktionellen Bestandteile des erfindungsgemäßen Reaktionsgemisches gemeint.

### Verwendete Messgeräte:

DSC: Messgerät DSC Q 20 V24.8 Build 120 der Fa. Texas Instruments
Viskosimeter: MCR 501 der Fa. Anton Paar

### Beispiel 1:

60 g eines Polyetherpolyols mit einer OH-Zahl von 56 mg KOH/g und einer Funktionalität von 2 (Viskosität bei 25 °C: 400 ± 50 mPas; 1,2-Propylenglycol als Starter; Propylenoxidbasis) wurden mit 26 g Eurepox® 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) und 250 ppm *para*-Toluolsulfonsäuremethylester vermischt und für 60 Minuten bei einem Druck von 1 mbar entgast. Danach wurden 214 g Desmodur® VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) mit 6 g DY 9577® (Trichlor(N,N-dimethyloctylamin)bor der Fa. Huntsman Corporation, Smp. 25-36 °C) vermischt, zur Polyolformulierung zugegeben und unter Rühren für 5 Minuten bei 1 mbar entgast. Danach wurde mit der Reaktionsmischung eine Vergussmasse durch Überführen des Materials in eine auf 130 °C vorgewärmte Form hergestellt, welche nach 15 Minuten entformt werden konnte.

### Beispiel 2:

60 g eines Polyetherpolyols mit einer OH-Zahl von 56 mg KOH/g und einer Funktionalität von 2 (Viskosität bei 25 °C: 400 ± 50 mPas; 1,2-Propylenglycol als Starter; Propylenoxidbasis) wurden mit 26 g Eurepox® 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) und 250 ppm *para*-Toluolsulfonsäuremethylester vermischt und für 60 Minuten bei einem Druck von 1 mbar entgast. Danach wurden 214 g Desmodur® VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) zugegeben, anschließend 478 g Füllstoff (Millisil W12 der Quarzwerke) eingearbeitet und die gesamte Mischung bei 70 °C entgast. Anschließend wurden 6 g DY 9577® (Trichlor(N,N-dimethyloctylamin)bor der Fa. Huntsman Corporation, Smp. 25-36 °C) bei ca. 50 °C zugegeben und unter Rühren für weitere 5 Minuten bei 1 mbar entgast. Danach wurde mit der Reaktionsmischung eine Vergussmasse durch Überführen der Mischung in eine auf 130 °C vorgewärmte Form hergestellt, welche nach 15 Minuten entformt werden konnte.

### Vergleichsbeispiel 3 :

60 g eines Polyetherpolyols mit einer OH-Zahl von 56 mg KOH/g und einer Funktionalität von 2 (Viskosität bei 25 °C: 400 ± 50 mPas; 1,2-Propylenglycol als Starter; Propylenoxidbasis) wurden mit 26 g Eurepox® 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) und 250 ppm *para*-Toluolsulfonsäuremethylester vermischt und für 60 Minuten bei einem Druck von 1 mbar entgast. Danach wurden 214 g Desmodur® VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) mit 38,5 g DY 9577® (Trichlor(N,N-dimethyloctylamin)bor der Fa. Huntsman Corporation, Smp. 25-36 °C) vermischt, zur Polyolformulierung zugegeben und unter Rühren für 5 Minuten bei 1 mbar entgast. Danach wurde die Reaktionsmischung in eine auf 130 °C vorgewärmte Form überführt. Die Reaktionsmischung war auch nach mehreren Stunden noch nicht fest; eine Entformung war daher nicht möglich.

### Vergleichsbeispiel 4 :

60 g eines Polyetherpolyols mit einer OH-Zahl von 56 mg KOH/g und einer Funktionalität von 2 (Viskosität bei 25 °C: 400 ± 50 mPas; 1,2-Propylenglycol als Starter; Propylenoxidbasis) wurden mit 26 g Eurepox® 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) und 250 ppm *para*-Toluolsulfonsäuremethylester vermischt und für 60 Minuten bei einem Druck von 1 mbar entgast. Danach wurden 103,6 g Desmodur® VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) mit 6 g DY 9577® (Trichlor(N,N-dimethyloctylamin)bor der Fa. Huntsman Corporation, Smp. 25-36 °C) vermischt, zur Polyolformulierung zugegeben und unter Rühren für 5 Minuten bei 1 mbar entgast. Die Viskosität der Reaktionsmischung direkt nach dem Vermischen betrug 1850 mPas bei 25 °C und wurde sehr schnell größer, was ein homogenes Befüllen der Form unmöglich machte.

### Vergleichsbeispiel 5 :

60 g eines Polyetherpolyols mit einer OH-Zahl von 56 mg KOH/g und einer Funktionalität von 2 (Viskosität bei 25 °C: 400 ± 50 mPas; 1,2-Propylenglycol als Starter; Propylenoxidbasis) wurden mit 26 g Eurepox® 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) und 250 ppm *para*-Toluolsulfonsäuremethylester vermischt und für 60 Minuten bei einem Druck von 1 mbar entgast. Danach wurden 214 g Desmodur® VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) mit 2,95 g Desmorapid DB (N,N-Dimethylbenzylamin der Fa. Rhein Chemie Rheinau GmbH, flüssig bei Raumtemperatur) vermischt, zur Polyolformulierung zugegeben und unter Rühren für 5 Minuten bei 1 mbar entgast. Die Viskosität stieg während der Überführung der Reaktionsmischung in eine auf 130 °C vorgewärmte Form sehr schnell an, so dass eine homogene Befüllung der Form nicht möglich war.

### Vergleichsbeispiel 6 :

60 g eines Polyetherpolyols mit einer OH-Zahl von 56 mg KOH/g und einer Funktionalität von 2 (Viskosität bei 25 °C: 400 ± 50 mPas; 1,2-Propylenglycol als Starter; Propylenoxidbasis) wurden mit 26 g Eurepox® 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) und 250 ppm *para*-Toluolsulfonsäuremethylester vermischt und für 60 Minuten bei einem Druck von 1 mbar entgast. Danach wurden 20,7 g Desmodur® VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas) mit 6 g DY 9577® (Trichlor(N,N-dimethyloctylamin)bor der Fa. Huntsman Corporation, Smp. 25-36 °C) vermischt, zur Polyolformulierung zugegeben und unter Rühren für 5 Minuten bei 1 mbar entgast. Die Viskosität der Reaktionsmischung direkt nach dem Vermischen betrug 2060 mPas bei 25 °C und wurde sehr schnell größer, was ein Befüllen der Form unmöglich machte.

| **Beispiele** | **1 (ohne Füllstoff)** | **2 (mit Füllstoff)** | **3* (ohne Füllstoff)** |
|---|---|---|---|
| Füllstoffgehalt nach DIN EN ISO 1172 [Gew.-%] | 0 | 61 | 0 |
| NCO/OH Äquivalentverhältnis | 12,4 | 12,4 | 12,4 |
| NCO/Epoxid Äquivalentverhältnis | 11,4 | 11,4 | 11,4 |
| Epoxid/Katalysator Äquivalentverhältnis | 6,4 | 6,4 | 1 |
| Viskosität (direkt nach dem Vermischen) [mPas] | 120 (25 °C) | 805 (50 °C) | 150 (25 °C) |
| Viskosität (60 min nach dem Vermischen) [mPas] | 320 (25 °C) | 810 (50 °C) | 350 (25 °C) |
| Viskosität 24 h nach dem Vermischen (Topfzeit) [mPas] | 340 (25 °C) | 850 (50 °C) | >50.000 (25 °C) |
| ausgehärtet nach [min] | 15 (130 °C) | 15 (130 °C) | wurde nicht fest (130 °C) |
| Brandtest (in Anlehnung an Kleinbrennertest nach DIN 53438-2) und Flammenhöhe [mm] | bestanden ca. 60 | bestanden ca. 60 | - |
| Glasübergangstemperatur T_{g} [°C] nach DIN EN ISO 53765 | 146 | 146 | - |
| E-Modul nach DIN ISO 178 [MPa] | 2500 | 8101 | - |
| Biegefestigkeit nach ISO 178 [MPa] | 108,6 | 86,9 | - |
| Biegedehnung nach ISO 178 [%] | 7,4 | 1,2 | - |
| Spezifischer Oberflächenwiderstand nach DIN IEC 60093 [Ohm] | 1,3*10¹⁷ | 3,8*10¹⁶ | - |
| Verlustfaktor tan δ (23 °C, 100 V, 50 Hz) | 0,0152 | 0,0235 | - |
| Dielektrizitätszahl ε (23 °C, 100 V, 50 Hz) | 3,94 | 4,32 | - |

| | | | |
|---|---|---|---|
| ***Vergleichsbeispiel** | | | |

| **Beispiele** | **4* (ohne Füllstoff)** | **5* (ohne Füllstoff)** | **6* (ohne Füllstoff)** |
|---|---|---|---|
| Füllstoffgehalt nach DIN EN ISO 1172 [Gew.-%] | 0 | 0 | 0 |
| NCO/OH Äquivalentverhältnis | 6,0 | 12,4 | 1,2 |
| NCO/Epoxid Äquivalentverhältnis | 5,74 | 11,4 | 1,15 |
| Epoxid/Katalysator Äquivalentverhältnis | 6,4 | 6,4 | 6,4 |
| Viskosität (direkt nach dem Vermischen) [mPas] | 1850 (25 °C) | 150 (25 °C) | 2060 (25 °C) |
| Viskosität (60 min nach dem Vermischen) [mPas] | 3100 | fest | fest |
| Viskosität 24 h nach dem Vermischen (Topfzeit) [mPas] | fest | fest | fest |

| | | | |
|---|---|---|---|
| ***Vergleichsbeispiele** | | | |

Das erfindungsgemäße Beispiel 1 ergibt eine kompakte und optisch transparente Vergussmasse, die sehr gute mechanische Eigenschaften (E-Modul von über 2500 MPa, Glasübergangstemperatur von 146 °C) aufweist. Das Reaktionsgemisch weist eine sehr niedrige Viskosität auf. Das in der Form hergestellte Teil hat keine Fehlstellen. Die verwendete Form konnte sehr schnell und gleichmäßig gefüllt werden. Dies ermöglicht kürzere Zykluszeiten, da die Formen für kürzere Zeit belegt werden. Vorteilhafterweise betrug die Topfzeit im erfindungsgemäßen Beispiel 1 mehr als 24 h. In dieser Zeit stieg die Viskosität des Systems kaum an. Bei 130°C härtete das Gießharz sehr schnell aus. Ein Nachtempern der erfindungsgemäßen Vergussmasse war nicht notwendig.

Das erfindungsgemäße Beispiel 1 wurde im Beispiel 2 wiederholt, mit dem Unterschied, dass der Reaktionsmischung ca. 61 Gewichts-% Quarzmehl (Millisil W12, der Fa. Quarzwerke) beigemengt wurden. Die mechanischen Eigenschaften der Vergussmasse zeigen ebenfalls sehr gute Werte. Der E-Modul liegt bei 8101 MPa und die Glasübergangstemperatur bei 146 °C. Die mit Quarzmehl gefüllte erfindungsgemäße Vergussmasse zeigt zudem sehr gute elektrische Werte, wie einen spezifischen Oberflächenwiderstand von 3,8 * 10¹⁶ Ohm, einen Verlustfaktor von tan δ = 0,0235 und eine Dielektrizitätszahl von ε = 4,32.

Die Viskosität im erfindungsgemäßen Beispiel 2 war mit ca. 800 mPas bei 50 °C sehr niedrig. Ein zur Zeit vielseitig eingesetztes Epoxidharz von Huntsman, Araldit® CY225/HY 925/Quarzmehl zeigt z.B. bei einer Temperatur von 50 °C eine deutlich höhere Viskosität von ca. 10.000 mPas. Das mit 60 Gew.-% Quarzmehl gefüllte Epoxidharz von Huntsman erfordert daher ein Vergießen bei höheren Temperaturen. Eine detaillierte Beschreibung des Epoxidharz-Systems von Huntsman für Elektrovergussanwendungen findet sich im Anwendungsdatenblatt ®Araldit-Giessharzsystem, Electrical Insulation Material, Ausgabe Mai 2004.

Die Einwaagen und Verhältnisse im Vergleichsbeispiel 3 entsprechen denen aus Beispiel 1 mit der Ausnahme, dass das Äquivalentverhältnis von Epoxid zu latentem Katalysator von 6,4:1 auf 1:1 reduziert wurde, indem die Menge des zugesetzten Katalysators erhöht wurde. Die Topfzeit verkürzte sich hier um knapp 40 %. Zudem lässt sich das Reaktionsgemisch bei 130 °C nicht vollständig verfestigen. Auch nach 60 Minuten bei 130 °C liegt das Material teilweise unvernetzt vor. Es konnte keine fertige Vergussmasse hergestellt werden. Daher konnten auch keine weiteren mechanischen und elektrischen Eigenschaften ermittelt werden.

Im Vergleichsbeispiel 4 wurde im Vergleich zum erfindungsgemäßen Beispiel 1 das NCO/OH-Äquivalentverhältnis von 12,4 auf 6 verringert, indem die Menge an eingesetztem Isocyanat (Desmodur® VP.PU 60RE11) reduziert wurde. Entsprechend verringerte sich das NCO/Epoxid-Äquivalentverhältnis von 11,4 auf 5,74. Als Folge der Reduzierung des NCO/OH-Äquivalentverhältnis lag die Anfangsviskosität bei ca. 1850 mPas bei 25 °C und machte somit ein homogenes Befüllen der beheizten Form, ohne Fehlstellen, unmöglich. Zudem wies das System aus Vergleichsbeispiel 4 nicht die lange offene Topfzeit von über 24 Stunden bei Raumtemperatur auf, wie beim erfindungsgemäßen Beispiel 1, sondern lag nach 4 Stunden fest vor. Es konnte keine fertige Vergussmasse hergestellt werden. Daher konnten auch keine weiteren mechanischen und elektrischen Eigenschaften ermittelt werden.

Die Einwaagen und Verhältnisse im Vergleichsbeispiel 5 entsprachen denen aus Beispiel 1 mit der Ausnahme, dass statt des latenten Katalysators Dy 9577® eine molar entsprechende Menge an nichtlatentem Katalysator verwendet wurde, in diesem Fall Desmorapid DB. Auch in diesem Fall stieg die Viskosität des Reaktionsgemisches sehr schnell an, was ein homogenes Befüllen der beheizten Form, ohne Fehlstellen, unmöglich machte. Die offene Topfzeit verkürzte sich hier auf nur 25 min und war somit mehr als 23 Stunden geringer als im erfindungsgemäßen Beispiel 1. Es konnte keine fertige Vergussmasse hergestellt werden. Daher konnten auch keine weiteren mechanischen und elektrischen Eigenschaften ermittelt werden.

Im Vergleichsbeispiel 6 wurde im Vergleich zum erfindungsgemäßen Beispiel 1 das NCO/OH-Äquivalentverhältnis von 12,4 auf 1,2 verringert, indem die Menge an eingesetztem Isocyanat (Desmodur® VP.PU 60RE11) reduziert wurde. Entsprechend verringerte sich das NCO/Epoxid-Äquivalentverhältnis von 11,4 auf 1,15. Als Folge der Reduzierung des NCO/OH-Äquivalentverhältnis lag die Anfangsviskosität bei ca. 2060 mPas bei 25 °C, die innerhalb weniger Minuten sehr stark anstieg und somit ein homogenes Befüllen der beheizten Form unmöglich machte. Zudem wies das System aus Vergleichsbeispiel 6 nur eine sehr geringe offene Topfzeit von weniger als 12 Minuten auf. Es konnte keine fertige Vergussmasse hergestellt werden. Daher konnten auch keine weiteren mechanischen und elektrischen Eigenschaften ermittelt werden

Die sehr guten mechanischen und elektrischen Kennwerte in Kombination mit einer sehr niedrigen und über einen langen Zeitraum konstanten Viskosität des Gießharzes und einer nur sehr kurzen Aushärtezeit, was zu einer hohen Produktivität bei der Herstellung von Vergussmassen oder - bauteilen führt, wurde nur mit den erfindungsgemäßen Beispielen erreicht.

Bei den erfindungsgemäßen Beispielen 1 und 2 trat Selbstverlöschung 55 Sekunden nach Flammentzug auf, und die Flammhöhe war max. 60 mm.

## Patentansprüche

1. Vergussmassen auf Polyisocyanurat- und Polyurethanbasis, wobei das Polyurethan und Polyisocyanurat aus einer Reaktionsmischung erhältlich ist, die aus
A) einem oder mehreren Polyisocyanaten
B) einem oder mehreren Polyolen
C) einem oder mehreren Polyepoxiden
D) einem oder mehreren latenten Katalysatoren und
E) gegebenenfalls Additiven und,
F) gegebenenfalls Füllstoffen besteht,
wobei die Reaktionsmischung ohne Füllstoffe bei 25 °C eine Viskosität von 20 bis 500 mPas, bevorzugt von 50 bis 400 mPas, besonders bevorzugt von 60 bis 350 mPas (gemessen nach DIN EN ISO 1342), ein Verhältnis der Anzahl der NCO-Gruppen der Komponente A) zu der Anzahl der OH-Gruppen der Komponente B) von 10:1 bis 16:1, bevorzugt von 11:1 bis 14:1, ein Verhältnis der Anzahl der NCO-Gruppen der Komponente A) zu der Anzahl der Epoxidgruppen der Komponente C) von 2:1 bis 25:1, bevorzugt von 7:1 bis 15:1, ganz besonders bevorzugt von 10:1 bis 14:1 und ein Verhältnis der Anzahl der Epoxid-Gruppen der Komponente C) zu der Anzahl der Mole an latentem Katalysator der Komponente D) von 1,1:1 bis 12:1, bevorzugt von 3:1 bis 10:1, ganz besonders bevorzugt von 5:1 bis 7:1 aufweist.

## Claims

1. Potting compound based on polyisocyanurate and on polyurethane, wherein the polyurethane and polyisocyanurate are obtainable from a reaction mixture consisting of
A) one or more polyisocyanates
B) one or more polyols
C) one or more polyepoxides
D) one or more latent catalysts and
E) optionally additives and
F) optionally fillers,
wherein the reaction mixture without fillers has a viscosity at 25°C of 20 to 500 mPas, preferably of 50 to 400 mPas, more preferably of 60 to 350 mPas (measured to DIN EN ISO 1342), a ratio of the number of NCO groups in component A) to the number of OH groups in component B) of 10:1 to 16:1, preferably of 11:1 to 14:1, a ratio of the number of NCO groups in component A) to the number of epoxy groups in component C) of 2:1 to 25:1, preferably of 7:1 to 15:1, most preferably of 10:1 to 14:1, and a ratio of the number of epoxy groups in component C) to the number of moles of latent catalyst in component D) of 1.1:1 to 12:1, preferably of 3:1 to 10:1, most preferably of 5:1 to 7:1.

## Revendications

1. Masses de coulée à base de polyisocyanurate et de polyuréthane, le polyuréthane et le polyisocyanurate pouvant être obtenus à partir d'un mélange réactionnel qui est constitué par
A) un ou plusieurs polyisocyanates
B) un ou plusieurs polyols
C) un ou plusieurs polyépoxydes
D) un ou plusieurs catalyseurs latents et
E) le cas échéant des additifs et
F) le cas échéant des charges,
le mélange réactionnel sans charges présentant, à 25°C, une viscosité de 20 à 500 mPa.s de préférence de 50 à 400 mPa.s, de manière particulièrement préférée de 60 à 350 mPa.s (mesurée selon la norme DIN EN ISO 1342), un rapport du nombre de groupes NCO du composant A) au nombre de groupes OH du composant B) de 10:1 à 16:1, de préférence de 11:1 à 14:1, un rapport du nombre de groupes NCO du composant A) au nombre de groupes époxyde du composant C) de 2:1 à 25:1, de préférence de 7:1 à 15:1, de manière tout particulièrement préférée de 10:1 à 14:1 et un rapport du nombre de groupes époxyde du composant C) au nombre de moles de catalyseur latent du composant D) de 1,1:1 à 12:1, de préférence de 3:1 à 10:1, de manière tout particulièrement préférée de 5:1 à 7:1.
